# EUROPEAN PATENT APPLICATION

(11) **EP 3 418 600 A1**
(43) Date of publication of application: **26.12.2018**
(21) Application number: 18175190.0
(22) Date of filing: 30.05.2018
(51) Int. Cl.: F16D 55/228, F16D 65/00

(54) **HOLLOW BRIDGE CALIPER WITH FILLED CORE**

(30) Priority: 14.06.2017 US 201762519358 P; 21.05.2018 US 201815984670
(71) Applicant: Akebono Brake Industry Co., Ltd., Tokyo 103-8534 (JP)
(72) Inventor: Hourihan, Rory Daniel, West Bloomfield, 48322 (US)
(74) Representative: Kutzenberger Wolff & Partner

(57) **Abstract**

A caliper (2) comprising: an inboard side (4), an outboard side (6) and a bridge (8) extending between and connecting the inboard side (4) to the outward side (6), the bridge (8) including: an upper wall (32); a lower wall (34) And one or more side walls (36) extending between and connecting the upper wall (32) to the lower wall (34) so that one or more hollow recesses (30) are located between and formed within the bridge (8); wherein the upper wall (32) and the lower wall (34) are connected only via the one or more side walls (36).

## Description

### FIELD

The present teachings generally relate to a braking system that includes a caliper having a bridge that includes one or more hollow recesses, preferably one or more self-supporting hollow recesses, and more preferably one or more hollow recesses that are filled with a filler.

### BACKGROUND

Generally, a braking system includes a rotor, a caliper body, a support bracket, an inboard brake pad, and an outboard brake pad that are on opposing sides of the rotor. The caliper body includes a bridge, one or more fingers opposing one or more piston bores, one or more opposing piston bores, or a combination thereof. Typically, the bridge is a solid structure that connects two or more opposed piston bores or one or more fingers that oppose one or more piston bores. These bridges are sufficiently rigid so that during a brake apply the bridges connect two opposing halves of the caliper and resist deflection. The bridges are sufficiently strong to resist high torque, however, the bridges add mass to the caliper. Attempts have been made to reduce the mass of the caliper by changing the configuration of the bridges. Examples of such braking devices are disclosed in U.S. Patent Nos. 4,381,336; 6,298,954; 9,334,909 and U.S. Patent Application Publication Nos. 2013/0092481 and 2016/0327107 all of which are expressly incorporated herein by reference for all purposes.

What is needed is a caliper with a reduced mass that that does not deflect or bend during a high load apply. What is needed is a caliper that has one or more hollow recesses within the bridge that reduce the overall weight of the caliper without weakening the caliper. It would be attractive to have a bridge with one or more hollow recesses filled with a filler that adds strength; dampens noise, vibrations, or harshness; adds strength with little additional mass; or a combination thereof.

### SUMMARY

The teachings herein surprisingly solve one or more of these problems by providing: a caliper comprising: (a) an inboard side; (b) an outboard side; and (c) a bridge extending between and connecting the inboard side to the outward side, the bridge including: (i) an upper wall; (ii) a lower wall; and (iii) one or more side walls extending between and connecting the upper wall to the lower wall so that one or more hollow recesses are located between and formed within the bridge; wherein the upper wall and the lower wall are connected only via the one or more side walls.

The present teachings provide: a caliper comprising: (a) an inboard side; (b) an outboard side; and (c) a bridge extending between and connecting the inboard side to the outward side, (d) one or more hollow recesses located within the bridge; and (e) one or more fillers that completely fill the one or more hollow recesses; wherein the one or more fillers structurally reinforce the one or more hollow recesses and the one or more fillers absorb vibrations.

The present teachings provide a caliper with reduced mass that that does not deflect or bend during a high load apply. The present teachings provide a caliper that has one or more hollow recesses within the bridge that reduce the overall weight of the caliper without weakening the caliper. The present teachings provide a bridge with one or more hollow recesses filled with a filler that adds strength; dampens noise, vibrations, or harshness; adds strength with little additional mass; or a combination thereof.

### BRIEF DESCRIPTION OF THE DRAWINGS

FIG. 1 is a front perspective view of a caliper;
FIG. 2 is a side view of a caliper;
FIG. 3 is a cross-sectional view of the caliper of FIG. 2 cut along line III-III;
FIG. 4 is the caliper of FIG. 3 with a filler in hollow recesses in the caliper;
FIG. 5 illustrates a caliper with a hollow recess that extends from a leading side to a trailing side with the hollow recesses including a filler;
FIG. 6 illustrates a caliper with a sliding core forming the hollow recesses;
FIG. 7 illustrates a caliper with a sand core forming the hollow recess;
FIG. 8 is a top perspective view of a caliper including a plurality of hollow recesses; and
FIG. 9 is a top perspective view of a caliper including a plurality of interconnected hollow recesses.

### DETAILED DESCRIPTION

The explanations and illustrations presented herein are intended to acquaint others skilled in the art with the invention, its principles, and its practical application. Those skilled in the art may adapt and apply the invention in its numerous forms, as may be best suited to the requirements of a particular use. Accordingly, the specific embodiments of the present invention as set forth are not intended as being exhaustive or limiting of the teachings. The scope of the teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

The present teachings are predicated upon providing an improved disc brake system and caliper for use with vehicles. For example, the caliper may be used with almost any vehicle (e.g. car, truck, bus, train, airplane, or the like). Alternatively, the caliper may be integrated into assemblies used for manufacturing or other equipment that require a brake such as a lathe, winder for paper products or cloth, amusement park rides, or the like. However, the present teachings are most suitable for use with a passenger vehicle (i.e. a car, truck, sports utility vehicle, or the like). The disc brake system may include a caliper, support bracket, two or more brake pads, a rotor, or a combination thereof. The support bracket may connect the caliper to a knuckle of a vehicle or a brake support. The disc brake system may be free of a support bracket. The caliper may directly connect to a knuckle of a vehicle or a brake support.

The caliper functions to move two or more opposing brake pads towards each other and into contact with a rotor so that a braking force is created. The caliper may be a fixed caliper. The caliper may be a floating caliper. The caliper includes an inboard side and an outboard side. The caliper may include one or more piston bores, one or more bridges, and one or more fingers. The one or more piston bores may be located in the inboard side, the outboard side, or both. Preferably, when the caliper is a floating caliper the one or more piston bores are located on the inboard side and the one or more fingers are located on the outboard side. The caliper may be a fixed caliper with piston bores and pistons on both the inboard side and the outboard side.

The one or more piston bores function to house a piston. The one or more pistons may axially move within the one or more piston bores relative to the piston bore axis. The one or more piston bores may receive a brake fluid and the brake fluid may axially move a piston within each of the one or more piston bores. The piston bore may have an open end, a closed end, and a cylindrical sidewall extending therebetween. The piston may be axially moved within the piston bore by an electric motor, a linear actuator, or both. The one or more piston bores assist in aligning a piston with a brake pad so that the piston when axially moved relative to the piston bore, moves a brake pad. The inboard side, the outboard side, or both may each include one or more piston bores, two or more piston bores, three or more piston bores, four or more piston bores, or even five or more piston bores. Each piston bore may include one piston.

The one or more pistons function to create a braking force. The pistons may axially move, along the piston bore axis, to create a parking brake apply, a service brake apply, or both. The pistons may be made of metal, phenolic, or both. The pistons may move into contact with a brake pad so that the brake pads are axially moved, relative to a rotational axis of the rotor, the piston bore, or both, into contact with a rotor to slow or stop the rotor. The pistons, fingers, or both may move into contact with a brake pad to axially move a brake pad into contact with a rotor.

The one or more brake pads function to slow, stop, maintain a stopped position, or a combination thereof of a vehicle, a machine, or both. The one or more brake pads may be asbestos free, copper free, free phenol free, or a combination thereof. The one or more brake pads may include steel, iron, a phenolic resin, carbon, graphite, graphene, or a combination thereof. The one or more brake pads may contact a rotor to slow or stop the rotor and the vehicle, machine, or both connected to the rotor.

The one or more rotors may function to rotate with a wheel, machine, shaft, or a combination thereof and when the rotor is slowed or stopped the wheel, machine, shaft, or a combination thereof attached to the rotor may stop, slow, remain stopped, or a combination thereof. The one or more rotors may be made of metal, a composite, or both. The one or more rotors may be located between an inboard side, an outboard side, under a bridge, or a combination thereof.

The bridge functions to connect an inboard side to an outboard side so that a braking force may be created. The bridge may connect the one or more piston bores to the one or more fingers. The fingers are preferably located on an opposing side of a rotor from the piston bore. More preferably, the piston bore is on the inboard side and the fingers are on the outboard side of the caliper. The bridge may be one solid piece. The bridge includes an upper wall and a lower wall. The bridge may include one or more side walls connecting the upper wall and the lower wall. The bridge may include an upper wall and a lower wall with material, one or more hollow recesses, or both located between the upper wall and the lower wall. The one or more hollow recesses may be located within the bridge between the upper walls, the lower walls, and the one or more side walls. The one or more hollow recesses may be entirely located within the bridge and only the fill recess of the hollow recess may be exposed for ingress or egress. The one or more hollow recesses may be exposed on one or more sides by the bridge lacking one or more side walls so that the hollow recesses are exposed to an external location without any intervening bridge walls. The bridge may include one or more windows that extend through the bridge. The bridge may include one or more parts or sections. The bridge include a leading bridge (at a leading end); a trailing bridge (at a trailing end); a central bridge located between the leading bridge and the trailing bridge.

The leading bridge may be located at a leading end of a caliper and may function to be a first piece of the bridge to be exposed to a rotating rotor. The trailing bridge may be located at a trailing end of a caliper and may function to a last piece of the bridge to be exposed to a rotating rotor. The leading bridge, the trailing bridge, or both may be located outside of the piston bores. The leading bridge, the trailing bridge, or both may partially radially overlap the piston bores. For example, if a line is drawing radially outward from a center of the rotor, the line may cross over all or a portion of the piston bore so that the piston bore is completely radially covered or partially radially covered by the leading bridge, the trailing bridge, or both. The leading bridge, the trailing bridge, or both may extend from an inboard side to an outboard side. The leading bridge, the trailing bridge, or both may include one or more windows (e.g., openings within the bridge). The leading bridge, the trailing bridge, or both may be free of windows. The leading bridge, the trailing bridge, or both may be free of any windows, may be solid, or both. The leading bridge, the trailing bridge, or both may include a portion that is solid, hollow, or both. The leading bridge, the trailing bridge, or both may include a hollow recess that is not radially covered by a piston bore. The leading bridge, the trailing bridge, or both may include a hollow recess that is fully or partially radially covered by one or more piston bores. The hollow recess may extend from the leading bridge to the trailing bridge through the central bridge. The central bridge may be free of any hollow recesses. The hollow recesses may be located only in the leading bridge, the trailing bridge, or both.

The one or more hollow recesses may function to be a lack of material or an absence of material in a location that does not affect strength of the caliper; reduces weight of the caliper; reduces noise, vibrations, or harshness of the caliper; or a combination thereof. The hollow recess may be a recess within the caliper. The hollow recesses may be located within the leading bridge, the trailing bridge, the central bridge, or a combination thereof. The hollow recesses may be on an outside or an inside relative to the leading end, the trailing end, or both. For example, a leading end may include two hollow recesses and one hollow recess may be a leading outside hollow recess with a leading inside hollow recess being located between the central bridge and the leading outside hollow recess. Similarly, the trailing end may include a trailing inside hollow recess and a trailing outside hollow recess. The hollow recess may remove material within low stress areas of the caliper. The hollow recess may be a through hole within a portion of the caliper. The hollow recess may be a closed space with one or more openings. The hollow recess may be self-supporting. For example, the hollow recess may be free of any supports or pillars within the hollow recess that provide support to one or more walls of the hollow recess. The upper wall and the lower wall may extend generally parallel to one another and may be free of contact or support other than the sidewalls. The hollow recess may extend from a trailing end towards a center, the leading end, or both. The hollow recess may extend from a leading end towards a center, the trailing end, or both. The hollow recess may be located partially or entirely within the leading bridge, the trailing bridge, or both. The one or more hollow recesses may be a plurality of hollow recesses. The caliper may include one or more, two or more, three or more, or even four or more hollow recesses. When more than one hollow recess is present the hollow recesses may be discrete. The hollow recesses may be fluidly connected through one or more flow connectors but otherwise may be discrete. Some of the hollow recesses may be connected together via one or more flow connectors and some of the hollow recesses may be entirely discrete. The hollow recesses may have a cross-sectional shape that is circular, triangular, square, rectangular, pentagonal, hexagonal, octagonal, or a combination thereof. The hollow recess may include an upper wall, a lower wall, one or more side walls, or a combination thereof.

The upper wall functions to create a top of the hollow recess. The upper wall may be free of support. The upper wall may only be supported by the side walls, an end wall, or both. The upper wall may extend substantially parallel to the lower wall. The upper wall may form a plane. The upper wall may extend in one or more planes, two or more planes, or three or more planes. The upper wall may follow a curvature of the bridge. The upper wall may be arcuate, straight, or both within the trailing bridge, the leading bridge or both. The upper wall may be flat or straight through the central bridge. The upper wall may change angle between the leading bridge to the central bridge. The upper wall may change angles between the trailing bridge and the central bridge. For example, the upper wall may extend in a first direction within the leading bridge, a second direction in the central bridge, and a third direction within the trailing bridge. The upper wall may completely enclose an upper side of the hollow recess. The upper wall may include one or more holes so that an interior of the hollow recess are exposed. The upper wall may have a complementary or mirror shape to the lower wall. The upper wall may extend substantially parallel to the lower wall (e.g., change in a distance between the upper wall and the lower wall may be within about 0.1 mm or less and preferably about 0.05 mm or less along a length of the upper wall and the lower wall). For example, the upper wall or the lower wall may have a portion where a gap between the upper wall and the lower wall changes so that over that section the upper wall and the lower wall are not completely parallel.

The lower wall functions to create a bottom of the hollow recess. The lower wall may be free of support. The lower wall may only be supported by the side walls, an end wall, or both. The lower wall may form a plane. The lower wall may extend in one or more planes, two or more planes, or three or more planes. The lower wall may follow a curvature of the bridge. The lower wall may be arcuate, straight, or both within the trailing bridge, the leading bridge or both. The lower wall may be flat or straight through the central bridge. The lower wall may change angle between the leading bridge to the central bridge. The lower wall may change angles between the trailing bridge and the central bridge. For example, the lower wall may extend in a first direction within the leading bridge, a second direction in the central bridge, and a third direction within the trailing bridge. The lower wall may completely enclose an upper side of the hollow recess. The lower wall may include one or more holes so that an interior of the hollow recess are exposed. The lower wall, the upper wall, or both may be connected by one or more side walls.

The one or more side walls may extend between and connect the upper wall to the lower wall to create the hollow recess. The one or more side walls may be an end wall. The end wall may terminate the one or more hollow recesses. The one or more end walls may support an end of a hollow recess. The end wall may form a closed end of the hollow recess (e.g., closed end wall). The end wall may connect to the upper wall, the lower wall, and one or more side walls (e.g., two side walls). The one or more side walls may extend along a longitudinal axis of the one or more hollow recesses. The one or more side walls may be two opposed side walls that may be substantially parallel. The one or more side walls may extend at an angle relative to the lower wall, the upper wall, or both. The angle between the side walls and the upper wall, the lower wall, or both may be about 135 degrees or less, about 125 degrees or less, about 115 degrees or less, or about 105 degrees or less. The angle between the side walls and the upper wall, the lower wall, or both may be about 60 degrees or more, about 75 degrees or more, or about 85 degrees or more (e.g., about 90 degrees). The one or more side walls may be solid, include one or more holes, one or more channels, or a combination thereof. The one or more side walls may be two opposing side walls. The one or more side walls may be 2 or more, 3 or more, 4 or more, 5 or more, or even 6 or more side walls. The sidewalls may extend at an angle relative to each other. For example, the side walls may be located at an angle similar to that of a hexagon. The side walls, top wall, and bottom wall may form the hollow recess and the hollow recess may include one or more fill recesses (e.g., openings).

The one or more fill recesses may be an opening where the hollow recess may be accessed from an external location. The one or more fill recesses may permit an upper wall, a lower wall, one or more side walls, or a combination thereof to be accessed. The one or more fill recesses may allow for removal of a casting tool, a milling tool, or both. The one or more fill recesses may allow for a sand core, a sliding core, or both to be removed. The one or more fill recesses may allow for filler to be added to the caliper. The one or more fill recesses may be located at a trailing end, a leading end, in the bridge, in an upper wall of the bridge, or a combination thereof. Each of the plurality of hollow recesses may include one or more fill recesses. The one or more fill recesses may be sufficiently large so that sand, a fluid, a molten material, or a combination thereof may be added to or removed from the hollow recess. The one or more fill recesses may narrow as the fill recess extends inward towards the hollow recess so that a filler may be added to the hollow recess and the filler may be prevented from being removed. The one or more fill recesses may have a cross-sectional area that is substantially equal to a cross-sectional area of the hollow recess. The one or more fill recesses may connect to the hollow recess, a flow connector, or both.

The one or more flow connectors may connect two or more hollow recesses together. The one or more flow connectors may permit air to exit a hollow recess when the hollow recesses is filled. For example, as a filler is placed into the hollow recess air may exit the hollow recess through the flow connector. The one or more flow connectors may be located on an inboard side, outboard side, center, leading end, trailing end, central location, or a combination thereof. The center may be located between the inboard side and the outboard side. The central location may be located between the leading end and the trailing end. The one or more flow connectors may permit a plurality of hollow recesses to be filled through a single fill recess. The one or more flow connectors may be a plurality of flow connectors. One or more flow connectors may extend from each hollow recess. A plurality of flow connectors may extend from each hollow recess. A plurality of flow connectors may extend from each hollow recess. The flow connectors may be an only inlet or outlet into some of the hollow recesses. For example, the caliper may include an inside hollow recess and the inside hollow recesses may be connected to an outside hollow recess and material may be introduced into or removed from the inside hollow recesses via the flow connectors. Sand, a filler, or both may move through the one or more flow connectors.

The one or more fillers may function to fill the hollow recesses, dampen vibrations, strengthen, reinforce, or a combination thereof. The one or more fillers may be expandable. The one or more fillers may be non-expandable. The one or more fillers may expand about 0 percent or more, about 20 percent or more, or about 50 percent or more. The one or more fillers may expand about 200 percent or less or about 100 percent or less. The one or more fillers may expand upon curing. The one or more fillers may contact, be bonded to, or both the upper wall and the lower; two or more side walls; an end wall and one or more side walls; an end wall and the top wall, the bottom wall, or both; or a combination thereof. The one or more fillers may be heat curable, moisture curable, UV curable, or a combination thereof. The one of more fillers may be liquid, solid, malleable, or a combination thereof in a green state. The one or more fillers may be pumpable. The one or more fillers may be a metal foam or a metalized foam. The one or more fillers may be an aluminum foam. The one or more fillers may be a structural adhesive. The filler may be a thermoset resin or a blend of a thermoset resin with a thermoplastic polymer. The filler may include a methyl methacrylate, an elastomeric toughener, an impact modifier, or a combination thereof. The filler may have a glass transition temperature of about 80 °C or more, about 100 °C or more, about 120 °C or more, or about 150 °C or more. The one or more fillers may include a polyurethane, an epoxy, or both. The one or more fillers may have good adhesion to steel, iron, aluminum, or a combination thereof. The one or more fillers may include an elastomer. The one or more fillers when cured may substantially entirely fill the hollow recesses (e.g., about 90 percent or more, about 95 percent or more, or about 99 percent or more). The one or more fillers may expand into the flow connectors, the fill recesses, or both. The one or more fillers may have a density that is less than that of the material of the caliper. For example, if the caliper is made of aluminum (e.g., 2.7 g/cm³) then the filler may have a density (e.g., about 0.4 g/cm³ to about 0.9 g/cm³) that is less than the aluminum. The filler may have a density that is about 2.5 g/cm³ or less, about 2.0 g/cm³ or less, about 1.5 g/cm³ or less, preferably about 1.0 g/cm³ or less, or even about 0.75 g/cm³ or less. The filler may have a young's modulus of about 500 MPa or more, about 750 MPa or more, about 1000 MPa or more, about 1500 MPa or more, about 5,000 MPa or more, about 7,500 or more, or about 8,500 or more. The filler may have a young's modulus of about 65,000 MPa or less, about 60,000 MPa or less, about 50,000 MPa or less, about 35,000 MPa or less, about 20,000 MPa or less, or about 10,000 MPa or less. The one or more fillers may be placed within the one or more hollow recesses after the one or more cores have been removed.

The one or more cores may function to form the hollow recesses. The one or more cores may be removable once the caliper and hollow recesses are formed. The one or more cores may be a sand core. The sand core after forming the hollow recess may be destroyed so that the sand may exit the caliper through the fill recesses, the flow connectors, or both. The cores may be a sliding core. The sliding core upon formation of the caliper, hollow recess, or both may be removed from the hollow recesses through the fill recesses.

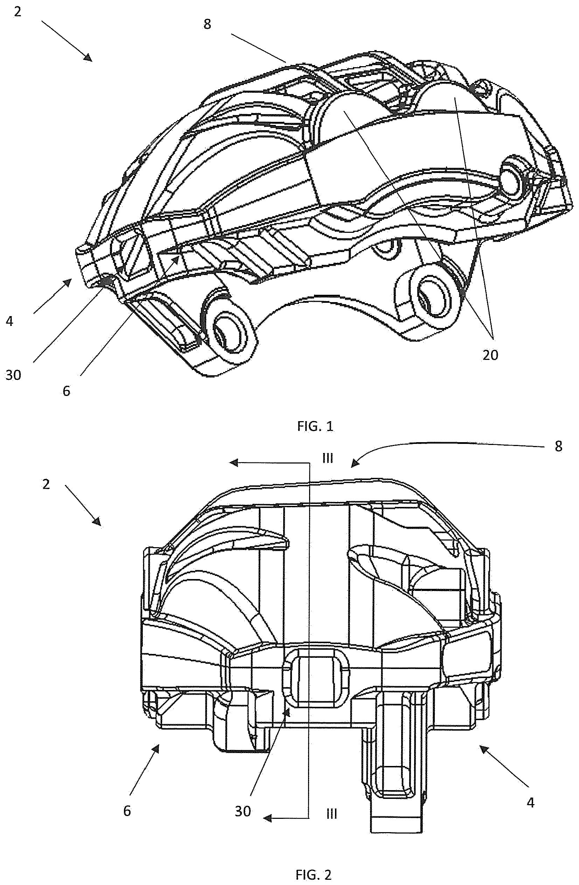

Figure 1 illustrates a perspective view of a caliper 2. The caliper 2 includes an inboard side 4 and an outboard side 6 that are connected together via a bridge 8. The caliper 2 includes piston bores 20 housing pistons (not shown) that move the brake pads (not shown). The bridge 8 includes a hollow recess 30 that extends through at least a portion of the bridge 8.

Figure 2 illustrates an end view of the caliper 2. The inboard side 4 and the outboard side 6 are connected by a bridge 8 that includes a hollow recess 30.

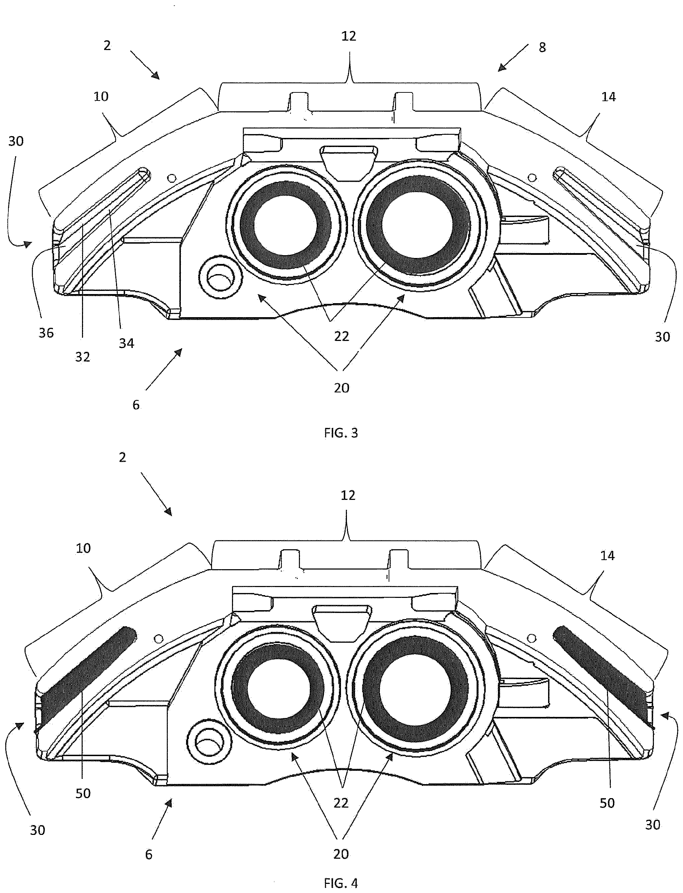

Figure 3 is a cross-sectional view of the caliper 2 of Figure 2 cut along lines III-III. An inside of the outboard side 6 is shown with the piston bores 20 that house the pistons 22 being visible. The piston bores 20 are located under the bridge 8, which as shown is divided into three sections. The bridge 8 as shown includes a leading bridge 10, a trailing bridge 14, and a central bridge 12 therebetween, and the hollow recess 30 is located within the leading bridge 10 and the trailing bridge 14 and the central bridge 12 is free of the hollow recess. The hollow recess 30 includes an upper wall 32, lower wall 34, and side walls 36.

Figure 4 is the cross-sectional view of the outboard side 6 of the caliper 2 of Figure 3 with the hollow recesses 30 shown in the leading bridge 10 and the trailing bridge 14 filled with a filler 50. The filler 50 is made of a different material than the material of the caliper 2. As shown, the central bridge 12 is free of hollow recesses. The outboard side 6 includes a pair of piston bores 20 that each include a piston 22.

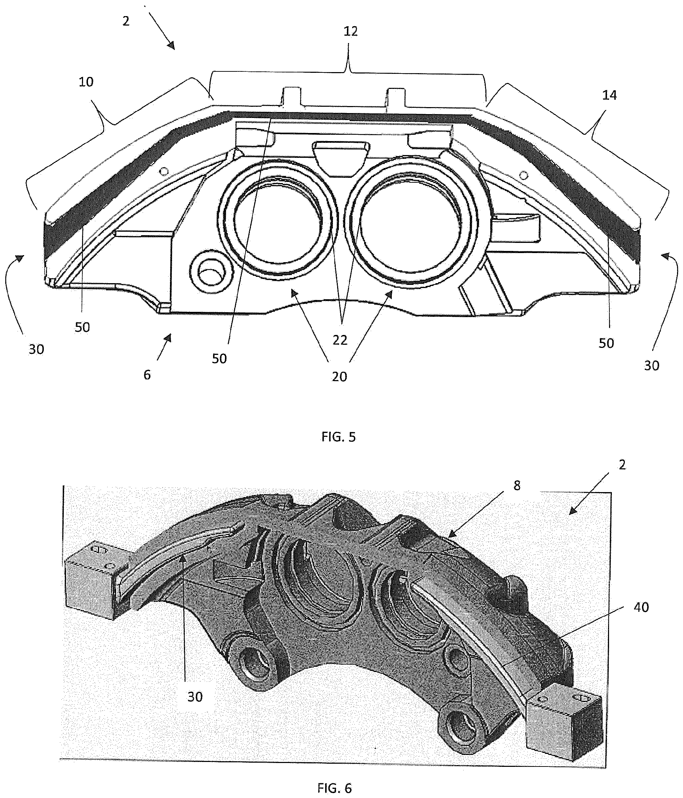

Figure 5 is a cross-sectional view of the outboard side 6 of the caliper 2 with the hollow recesses 30 extending from the leading bridge 10 to the trailing bridge 14 through the central bridge 12 and the entire hollow recess 30 being filled with a filler 50. The filler 50 is made of a different material than the material of the caliper 2. The outboard side 6 includes a pair of piston bores 20 that each include a piston 22.

Figure 6 illustrates a caliper 2 being formed with a core 40 that creates the hollow recesses 30 within the bridge 8. The core 40 as shown is a sand core.

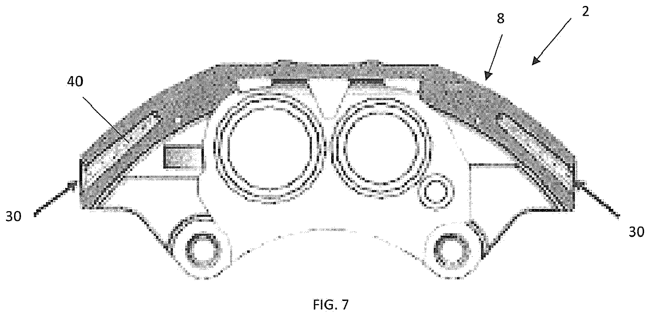

Figure 7 illustrates a caliper being formed with a core 40 that creates the hollow recesses within the bridge 8. The core 40 as shown is a sliding core.

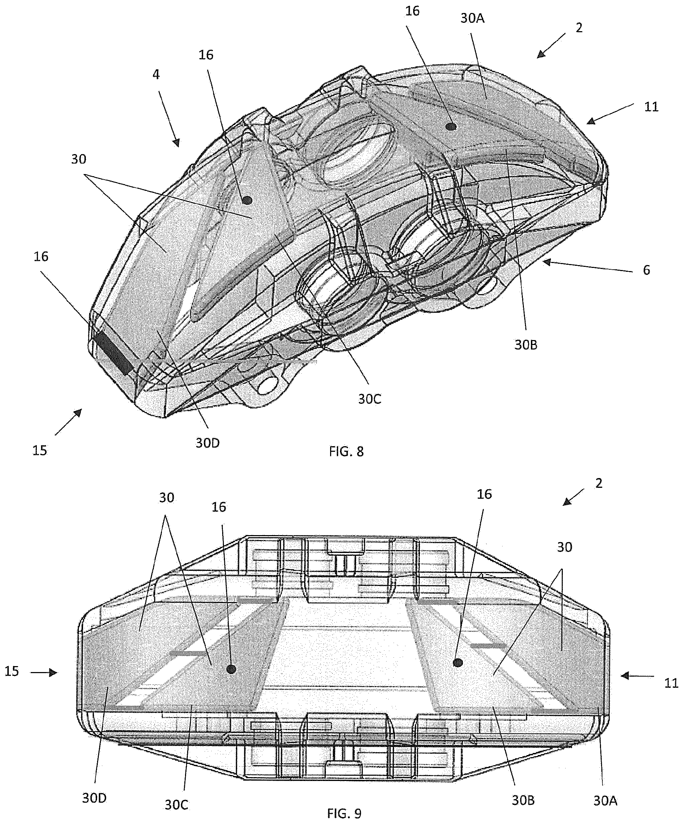

Figure 8 is a perspective view of a caliper 2 having an inboard side 4 opposing an outboard side 6 and a leading end 11 opposing a trailing end 15. The caliper 2 has a plurality of hollow recesses 30 formed in the bridge 8. The hollow recesses 30 can be filled through a fill recess 16 extending into each of the hollow recesses 30. The geometry of each hollow recess 30 is different from the inboard side 6 to the outboard side 4. The geometry of the hollow recesses have mirror symmetry when viewing the recesses from a center point towards the leading end 11 and from the center point towards the trailing end 15. A hollow recesses 30 in the leading half (leading outside hollow recess 30A and leading inside hollow recess 30B) have mirror symmetry with the hollow recesses 30 in the trialing half (trailing inside hollow recess 30C and trailing outside hollow recess 30D).

Figure 9 illustrates a top view of the caliper 2 including a plurality of hollow recesses 30 within the bridge 8. The caliper 2 includes a leading end 11 and a trailing end 15. The geometry of the hollow recesses have mirror symmetry when viewing the recesses from a center point towards the leading end 11 and from the center point towards the trailing end 15. A hollow recesses 30 in the leading half (leading outside hollow recess 30A and leading inside hollow recess 30B) have mirror symmetry with the hollow recesses 30 in the trialing half (trailing inside hollow recess 30C and trailing outside hollow recess 30D).

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.
2 Caliper
4 Inboard side
6 Outboard side
8 Bridge
10 Leading bridge
11 Leading end
12 Central bridge
14 Trailing bridge
15 Trailing end
16 Fill recess
18 Flow Connectors
20 Piston bores
22 Piston
24 Brake pad
30 Hollow recess
30A Leading outside hollow recess
30B Leading inside hollow recess
30C Trailing inside hollow recess
30D Trailing outside hollow recess
32 Upper wall
34 Lower wall
36 Side wall
40 Core (Sand or Sliding)
50 Filler

## Claims

1. A caliper comprising:
a. an inboard side;
b. an outboard side; and
c. a bridge extending between and connecting the inboard side to the outward side, the bridge including:
i. an upper wall;
ii. a lower wall; and
iii. one or more side walls extending between and connecting the upper wall to the lower wall so that one or more hollow recesses are located between and formed within the bridge;
wherein the upper wall and the lower wall are connected only via the one or more side walls.

2. The caliper of claim 1, wherein the one or more hollow recesses include one or more fillers that completely fill the one or more hollow recesses.

3. The caliper of claim 2, wherein the one or more fillers is an aluminum foam or a structural adhesive.

4. The caliper of claim 3, wherein the structural adhesive is a thermoset resin or a blend of thermoset resin with a thermoplastic polymer.

5. The caliper of claim 2, wherein the fillers upon curing have a glass transition temperature of about 80 °C or more.

6. The caliper of claim 3, wherein the structure adhesive includes a polyurethane, an epoxy, or both, and expands 0 percent or more.

7. The caliper of claim 2, wherein the one or more fillers have good adhesion to adhere to steel or iron.

8. The caliper of claim 1, wherein the one or more hollow recesses have a closed end wall, and the one or more hollow recesses are a plurality of hollow recesses and each of the plurality of hollow recesses are discrete from one another.

9. The caliper of claim 1, wherein the one or more hollow recesses are a plurality of hollow recesses and some of the plurality of recesses are connected together via one or more flow connectors.

10. The caliper of claim 8, wherein each of the one or more hollow recesses include one or more fill recesses.

11. The caliper of claim 1, wherein the one or more hollow recesses are free of pillars.

12. The caliper of claim 1, wherein the bridge includes a plurality of sections including at least a leading bridge, a central bridge, and a tailing bridge, and the one or more hollow recesses are located within the leading bridge, the tailing bridge, or both.

13. The caliper of claim 12, wherein the central bridge is free of hollow recesses.

14. A caliper comprising:
a. an inboard side;
b. an outboard side; and
c. a bridge extending between and connecting the inboard side to the outward side,
d. one or more hollow recesses located within the bridge; and
e. one or more fillers that completely fill the one or more hollow recesses;
wherein the one or more fillers structurally reinforce the one or more hollow recesses and the one or more fillers absorb vibrations.

15. The caliper of claim 14, wherein the bridge includes a leading end and a trailing end with a central portion located therebetween and the leading end, the trailing end, or both include the one or more hollow recesses that are two hollow recesses, and both the inboard side and the outboard side include one or more pistons.
